# EUROPEAN PATENT SPECIFICATION

(11) **EP 2 325 536 B1**
(45) Date of publication and mention of the grant of the patent: **09.01.2013**
(21) Application number: 09176682.4
(22) Date of filing: 20.11.2009
(51) Int. Cl.: F16L 27/08

(54) **High temperature range axial seal, system and method**
Axialdichtung für einen hohen Temperaturbereich, System und Verfahren
Joint axial haute température, système et procédé

(43) Date of publication of application: 25.05.2011
(73) Proprietor: Huhnseal AB, 261 23 Landskrona (SE)
(72) Inventor: Anderberg, Göran, 261 61 Landskrona (SE)
(74) Representative: Franzolin, Luigi

(56) References cited:
- WO-A2-2007/146183
- DE-A1- 4 417 994
- DE-U1-202004 019 988
- FR-A5- 2 146 768
- US-A- 4 273 363

## Description

### Field of the Invention

This invention pertains in general to the field of axial seals, sealing methods with such seals and systems where such seals are applied. More particularly the invention relates to a seal assembly for sealing a rotatable pipe used for transportation of a high temperature medium. The seal assembly comprises a swivel joint having two axially opposing annular sliding surfaces of two pipe ends, a bearing for providing slidable movement between the pipe ends, and a radially positioned heat insulating shield. Such a seal assembly is for example shown in document DE 4417994 A1.

### Background of the Invention

In solar collector applications a heat transportation medium, such as salt, is heated at the focus point of incoming solar rays, whereupon the heated medium is transported in pipe sections at the focus point before led to heat up water in a heat exchanger. The pipe sections follows the range of movement of the solar collector during the course of the day, where the rotational movement together with the considerable temperatures put large strains, both mechanical and thermal, on the sealing elements at the rotating pipe sections.

Previously, oil has been commonly used as a heat transportation medium in above application. The relatively low temperature of the heated oil results however in a too low steam pressure of the heated water for obtaining a good energy efficiency using a turbine to convert the energy of the steam. Salt may be heated to higher temperatures by the solar rays, and produce a steam pressure that provides greatly improved energy efficiency. The increased temperatures render however existing sealing solutions obsolete. Common swivel joints utilizing carbon elements for sealing do not have the chemical resistance to comply with the salt at the high temperature and will degrade over time, leading to unwanted leakage. Common solutions utilizing steel bellows trying to avoid leaking joints, experience considerable mechanical fatigue due to the repeated rotational movements of the solar collector, including movements due to expansion of the heated pipe sections, and will also degrade over time. Other issues arise as salt solidifies when not heated exceeding a temperature over approx. 200 degC where it liquefies.

In addition, the weight of the pipe sections at the focus point of the solar collector puts large requirements on the mechanical stability of the seals.

Hence an improved seal assembly, method, and/or system providing sealing of a rotatable pipe used for transportation of a high temperature medium would be advantageous. Moreover a system of seal assemblies for a solar collector application would be advantageous.

### Summary of the Invention

Accordingly, embodiments of the present invention preferably seek to mitigate, alleviate or eliminate one or more deficiencies, disadvantages or issues in the art, such as the above-identified, singly or in any combination by providing an assembly and method that prolongs the lifetime of a seal assembly, according to the appended patent claims.

According to a first aspect of the invention, a seal assembly for sealing a rotatable pipe is provided, the rotatable pipe having an inner void for transportation of high temperature medium therein, an axial direction, and a radial direction, the seal assembly comprising a swivel joint having two axially opposing annular sliding surfaces, the first sliding surface belonging to a first pipe end aligned in the axial direction and the second sliding surface belonging to a second pipe end aligned in the axial direction, the first and second pipe ends being rotatable with respect to each other, at least one bearing being axially aligned for providing slidable movement between the first and second pipe ends, the bearing being positioned at the periphery in the radial direction of the pipe, a heat insulating shield being radially positioned between the sliding surfaces and the at least one bearing and extending substantially in the axial direction to cover a portion of said pipe end, whereby the bearing is shielded from the high temperature medium and/or heat thereof.

According to a second aspect of the invention, a method for sealing a rotatable pipe with a seal assembly is provided, the pipe having an inner void for transportation of high temperature medium therein, an axial direction, and a radial direction, the method comprising providing sealing by means of a joint, such as a swivel joint, having two axially opposing annular sliding surfaces, the first sliding surface belonging to a first pipe end aligned in the axial direction and the second sliding surface belonging to a second pipe end aligned in the axial direction, the first and second pipe ends being rotatable with respect to each other, providing slidable movement by means of at least one bearing being axially aligned between the first and second pipe ends, the bearing being positioned at the periphery in the radial direction of the pipe, providing insulation by means of a heat insulating shield being radially positioned between the sliding surfaces and the at least one bearing and extending substantially in the axial direction, thereby shielding the bearing from the high temperature medium and/or heat thereof.

A swivel joint is a coupling or union allowing two parts of the joint rotating or turning independently of each other.

According to another aspect of the invention, a system comprising at least two seal assemblies according to the first aspect of the invention for a solar collector unit is provided, the solar collector unit having a moveable collector for rotation in an angular interval, a moveable receiver tube, a fixed transportation tube, where the receiver tube is rotatable with respect to the transportation tube in said angular interval, the system comprising a linkage pipe joining the receiver tube and transportation tube, the linkage pipe comprising at least one pipe segment, the at least two seal assemblies seal the pipe ends of the at least one pipe segment to the receiver tube and transportation tube, whereby a circulation of a heated medium between the receiver tube and the transportation tube is obtained during rotation in said angular interval.

According to yet another aspect of the invention, a use of a seal assembly according to the first aspect of the invention for a solar collector unit is provided, the solar collector unit comprising a moveable collector for rotation in an angular interval, a moveable receiver tube, a fixed transportation tube, the receiver tube being rotated with respect to the transportation tube in said angular interval, the seal assembly being used in a linkage pipe joining the receiver tube and transportation tube, the linkage pipe comprising at least one pipe segment, the seal assembly being used for sealing the pipe ends of the at least one pipe segment to the receiver tube and transportation tube, whereby a circulation of a heated medium between the receiver tube and the transportation tube is obtained during rotation in said angular interval.

Further embodiments of the invention are defined in the dependent claims, wherein features for the second and subsequent aspects of the invention are as for the first aspect mutatis mutandis.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a side view of a seal assembly according to an embodiment of the present invention, and
Fig. 2 is a schematic view of a system of seal assemblies for a solar collector unit according to an embodiment of the present invention.

### Description of embodiments

Specific embodiments of the invention will now be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

The following description focuses on an embodiment of the present invention applicable to a seal assembly for a rotatable pipe used for transportation of a high temperature material. However, it will be appreciated that the invention is not limited to this application but may be applied to many other constructions involving heat shielding or isolation of a rotating shaft.

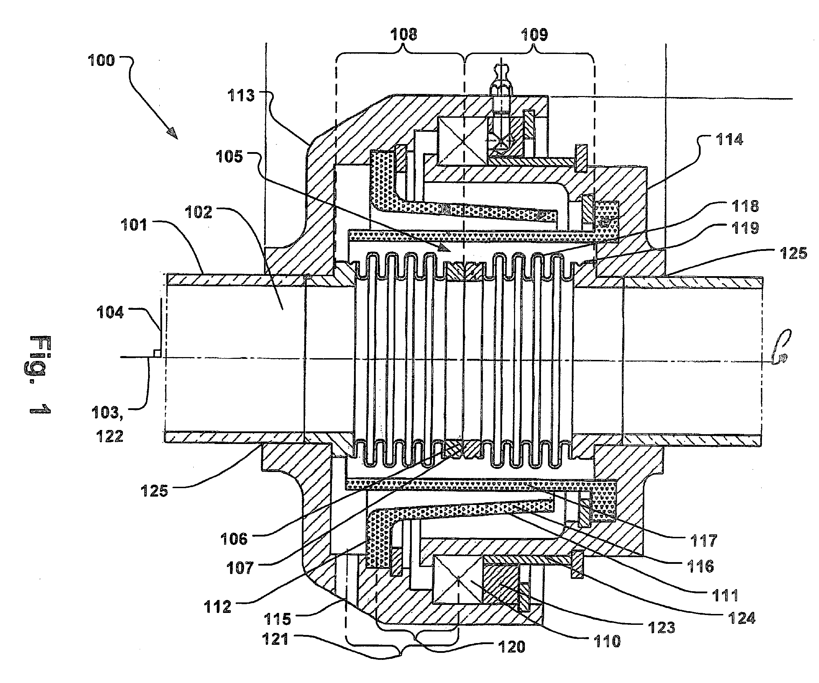

In Fig. 1, a seal assembly 100 according to an embodiment of the invention is shown in a side view. The seal assembly is for sealing a rotatable pipe 101 having an inner void 102 where a high temperature medium is statically present or transported in either direction of the pipe 101. An axial direction 103 and a radial direction 104 of the pipe 101 are shown. The axial direction 103 is parallel to the rotational axis 122 of the pipe 101, and the radial direction 104 is perpendicular to the axial direction 103. The seal assembly comprises a swivel joint 105 where a first sliding surface 106 of a first pipe end 108 meet with a second sliding surface 107 of a second pipe end 109.

The first 108 and second 109 pipe ends of the pipe 101 are aligned in the axial direction 103 and are rotatable with respect to each other. The opposing sliding surfaces 106 and 107 are annular in shape and are in contact with each other. The degree of contact may vary, such that the full sliding surface 106 may be in contact with the full sliding surface 107. Alternatively only a portion of the sliding surfaces 106 and 107 may be in contact, or the sliding surfaces 106 and 107 may be separated by a distance thereby having no contact, providing sufficient sealing. However, in normal operation they are in contact. The seal assembly 101 comprises a bearing 110 in the radial direction 104 and having its rotational axis aligned in the axial direction 103 for providing a slidable or a smooth rotational movement between the pipe ends 108 and 109. The bearing 110 may be accompanied with additional bearings (not shown) for providing the rotational movement between the pipe ends 108 and 109 and for carrying radial load e.g. due to the weight of the pipe 101 and medium therein.

A heat insulating shield 111 unit or element is positioned radially between the sliding surfaces 106, 107, and the bearing 110 to protect the bearing 110 from the heated medium, or heat thereof, in the void 102 that extends in the pipe 101 through the opposing pipe ends 108 and 109. The heated medium may be pressurized. The high temperature medium may be released between the sliding surfaces 106 and 107 depending on the degree of contact between these two surfaces, whereupon the heat insulating shield 111 physically stops the heated material from reaching the bearing 110. This may occur e.g. due to an undesired leakage due to wear of the sealing or excessive pressure of the heated medium. Radiated heat from the heated medium, while present in the void 102 or released from the sliding surfaces 106 and 107, is also blocked by the insulating shield 111. The temperature of the heated medium may be in the range 500-600 degC, or above. The bearing 110 has as much lower operational temperature, which was not an issue previously when oil was commonly used as the heat transportation medium. The heat insulating shield 111 further provides isolation whereby the energy efficiency of the seal assembly 100 is improved.

The heat insulating shield 111 is arranged to extend in the axial direction 103 such that it may cover at least the axial extent of the bearing 110. Alternatively, or in addition, the heat insulating shield 111 may extend to cover any portion of the pipe ends 108, 109, or pipe 101. The axial extent of the bearing 110 is to be construed as the projection of the dimensions of the bearing 110 on the axial direction 103. A larger coverage in the axial direction 103 by the heat insulating shield 111 may improve the shielding of the bearing 110 from heated medium and radiant heat thereof. The heat insulating shield 111 may preferably be arranged to cover the axial portion at which the sliding surfaces 106 and 107 are present for effectively blocking heated medium released from the sliding surfaces 106 and 107 if subsequently spreading in the radial direction 104.

The heat insulating shield 111 may be arranged along the axial and radial direction, with respect to its position or dimensions, to minimize the exposure of heated material to the bearing 110.

The heat insulating shield 111 may have a continuous annular shape, for shielding the bearing 110. Alternatively, or in addition, it may be arch shaped, defining a circle sector of any degree. A continuous annular shape may provide the most efficient shielding of the bearing 110.

The heat insulating shield 111 may have a radial shield portion 112 extending substantially in the radial direction 104. The radial shield portion 112 may have an axial displacement 120 from the bearing 110, such that the radial shield portion 112 has a different axial position than the bearing 110. High temperature medium, or radiant heat thereof, propagating in the radial direction 104 are accordingly blocked from spreading in the axial direction 103 by the radial shield portion 112. Spreading of heated medium in the axial direction 103 towards the bearing 110 may be prevented as the radial shield portion 112 has an axial displacement 120 in relation to the bearing 110. A larger amount of axial displacement 120 may improve the amount of shielding as the distance between the heated medium and the bearing increase 110. The radial shield portion 112 may be arranged along the axial and radial direction, with respect to its position or dimensions, to minimize the exposure of heated material to the bearing 110.

The heat insulating shield 111 that extends substantially in the axial direction 103 may be aligned at an angle towards the axial direction 103 such that heated medium blocked by the heat insulating shield 111 is diverted towards the radial shield portion 112 under the influence of gravitational force, centrifugal forces, or pressure of the propagating heated medium. Further axial propagation of the heated material, for example towards the bearing 110, is thuds controlled and blocked by the radial shield portion 112. The heat insulating shield 111 extending substantially in the axial direction 103 may have a continuous transition to the radial shield portion 112, as in the embodiment in Fig. 1, or discontinuous in the event the radial shield portion 112 constitutes a heating shield separate from the heating shield 111. A continuous transition may improve the shielding of the bearing 110.

The seal assembly 100 comprises a first casing part 113 fixed to the first pipe end 108, and a second casing part 114 fixed to the second pipe end 109. The casing parts 113 and 114 may be welded at welding points 125, which may be annular welding points in order to follow the annular border between the pipe 101 and the casing parts, 113 and 114. The welding points provide necessary sealing in order to avoid the use of elastic seals. Some embodiments of the sealing assembly 100 are thus completely free of seals made of elastic materials, such as polymer or rubber materials. This is in particular advantageous from a point of temperature and/or corrosion leading to increased live of the assembly. The bearing 110 joins the casing parts 113 and 114 along the annular periphery at a radial distance, such that the slidable motion between the pipe ends 108 and 109 is obtained. The casing parts 113 and 114 may have continuous annular shapes defining an enclosure of the pipe ends 108 and 109 when joined by the bearing 110. The heat insulation shield 111 and radial shield portion 112 may be fixed to any one of the casing parts 113 and 114, as long as the rotational movement between the casing parts 113, 114 and subsequently the pipe ends 108, 109 is possible.

One of the casing parts 113 and 114 may be provided with an opening 115 for diverting released high temperature medium, or radiant heat thereof, to a medium surrounding the seal assembly 100, or to a reservoir attached to the opening. Damage to the bearing 110 may thereby be prevented, as no build up of heated medium occurs in the seal assembly. The opening may be provided with a filter in order to avoid unwanted particles entering the interior of the seal assembly construction. Several openings 115 may be provided in one, or both, of the casing parts 113 and 114. The opening 115 may be directed vertically with respect to the gravitational force in order for the heated medium to be released to the surroundings by its own weight. The heat insulation shield 111 or radial shield portion 112 may be arranged in the axial and radial directions 103 and 104 to divert the heated medium to the at least one opening 115, for example by arranging the radial shield portion 112 to the opening 115 such that heated medium may transition from the radial shield portion 112 to the opening 115. In such instance the surface of the radial shield portion 112 may be substantially flush to the edge to the opening 115, or having an offset in the axial direction 103. In both instances the radial shield portion 112 may be fixed to one of the casing parts 113, 114, to prevent heated medium from propagating in the radial direction 104 before being diverted to the opening 115. The opening 115 may be utilized for arranging active cooling of the seal assembly 100, for example by introducing a cooling medium through the opening 115, whereby the heat insulating shield 111, bearing 110, and the pipe ends 108, 109 may expel heat to the cooling medium. The cooling medium would transport the heat to the surroundings by exiting at an opening 115.

The opening 115 may be positioned at a distance from the bearing by having a second axial displacement 121 in relation to the bearing 110, where the second axial displacement 121 may be larger than the axial displacement 120 of the radial shield portion 112 for diverting the heated medium further away from the bearing 110.

In the embodiment in Fig. 1 the heat insulating shield 111 comprises a first shield 116 and a second insulating shield 117 unit or element. In the particular embodiment the first shield 116 comprises the radial shield portion 112 as previously referred to. The first shield 116 is in a fixed position in relation to the first pipe end 108, and the second shield 117 is in a fixed position in relation to the second pipe end 109, whereby the second shield 117 is rotatable with respect to the first shield 116. Each of the shields 116 and 117 are extending substantially in the axial direction 103 and may have a continuous annular shape. Possible arrangements of the heat insulating shield 111 discussed above apply to each of the first and second shields 116 and 117. Further, each of the first and second shields 116 and 117 may comprise a radial shield portion 112. In Fig. 1 the first shield 116 is fixed in the first casing part 113, and the second shield 117 is fixed in the second casing part 114, the casing parts 113 and 114 in turn being fixed to the pipe ends 108 and 109, respectively. Having two shields may improve the shielding of the bearing 110 from the heated medium. Also the insulation of the pipe ends 108 and 109 may be improved, decreasing a loss of heat, and thereby increasing the energy efficiency of the seal assembly 100. Several more heat insulation shields may be used in the seal assembly 100.

In Fig. 1 the first shield 116 is displaced in the radial direction 104 with respect to the second shield 117. The amount of displacement may be varied, for example such that contact is provided between the first and second shields 116, 117. Alternatively no contact is provided, thereby having complete clearance between the shields 116 and 117. The axial extent of the first shield 116 may overlap with the axial extent of the second shield 117 as in Fig. 1. The amount of overlap of said axial extent between the shields 116 and 117 may be varied. When the shields 116 and 117 overlap, heated medium or radiant heat thereof, propagating in the radial direction 104, are blocked by both shields 116 and 117, which may improve the shielding of the bearing 110. Further, the thermal isolation may be improved, minimizing heat loss from the seal assembly 100 to the surroundings.

Each of the pipe ends 108 and 109 may comprise a resilient pipe end having a flexible pipe wall 118 extending in the axial direction 103. In Fig. 1 the flexible pipe wall 118 extends between the second sliding surface 107 and a rigid pipe wall 119 of the second pipe end 109. The first pipe end 107 is comprised likewise. The flexible pipe wall 118 provides for a range of movement of the second pipe end 109 in the axial direction 103 and the radial direction 104, whereby the rotational axis 122 of the first pipe end 108 may be displaced from that of the second pipe end 109, while contact between the sliding surfaces 106 and 107 is maintained. A higher tolerance against movements of the pipe ends 108 and 109 is thus achieved. Temperature differences due to the presence of heated medium in the void 102 may induce expanding and contracting motions in the material of the pipe 101 and pipe ends 108, 109, such that displacement of each rotational axis occurs. The flexible pipe wall 118 may be comprised of any material allowing for flexible movement, such as flexible steel, of high temperature resistance. Additionally, the material is to be corrosive resistant. A suitable range of materials is including Inconel ® described below. The flexible pipe wall 118 may be arranged in any shape to allow resilient or flexible movement. The shape is for instance bellow shaped, according to the embodiment illustrated in Fig. 1.

The flexible pipe wall 118 may be resiliently compressible in the axial direction 103, whereby a greater range of displacement may be provided between the rotational axis 122 of the first pipe end 108 and the rotational axis of the second pipe end 109, while contact between the sliding surfaces 106 and 107 is maintained. A higher pressure of sliding surface 106 against sliding surface 107 may also be provided by adjusting the resilient force exerted by a compressed flexible pipe wall 118.

In Fig. 1 the bearing is positioned in the radial direction of the sliding surfaces 106 and 107, such that the bearing 110 is centered at the same axial position as the sliding surfaces 106 and 107. The centered alignment may improve the mechanical stability of the seal assembly. The bearing 110 has a first fixing element 123 and a second fixing element 124, for locking the bearing 110 to the first and second casing parts, 113 and 114, respectively. The spacing 125 between the bearing fixing elements 123 and 124 is small enough to stop unwanted particles, such as sand grains, from reaching the bearing 110, and large enough to avoid unnecessary friction between the fixing elements 123 and 124. This is particularly advantageous in operating conditions in deserts, where solar collector applications are thus advantageously operated with such sealing assemblies 100.

Further, the bearing 110 is positioned at a distance in the radial direction 104 from the sliding surfaces 106 and 107, such that the spacing between said sliding surfaces 106 and 107 and the bearing 110 provides for a stronger construction of the seal assembly 100, due to a decrease in momentum force at the bearing 110. This provides for a compact, self supporting seal assembly 100, capable of receiving large mechanical load. The bearing 110 may be placed close to the periphery of the radial extent of the casing parts 113 and 114.

The high temperature medium, also referred to as heated medium above, which is present in the void 102 may be a liquefiable solid, such as salt. The high temperature medium may have a liquid temperature at which it transitions from a solid to a liquid, such as 200 degC. The seal assembly according to the present invention is operable below and above the liquid temperature. In case the heated medium is salt, and the pipe 101 is heated by solar rays in a solar collector application, the salt may reach temperatures in the excess of 550 degC. In normal operation the heat insulating shield 111 provides sufficient isolation from the surroundings such that the heated medium maintains a temperature above its liquid temperature, even though the heat of the sun does not heat the salt. The pressure of the heated medium in the void 102 of the pipe 101 may be sufficient to transport the heated medium in the pipe 101 at a desired speed in the axial direction 103. For example in case the heated medium is salt, the pressure may be approximately 18 bar. The seal assembly 100 works very well with said high temperature medium and at said temperatures and pressures.

The heat insulating shield 111, radial shield portion 112, and/or first shield 116 and second shield 117 may be made from a ceramic, such as aluminum oxide, or any other material capable of withstanding high temperature in the excess of 550 degC. The material may provide one or more of a physical barrier to the heated medium, being a solid or liquid, or to some extent gaseous, and a barrier towards heat radiated from such medium.

The sliding surfaces 106 and 107 may be of a material comprising or consisting of stainless steel. A particularly suitable material is e.g. Inconel®. Inconel® refers to a family of austenitic nickel-chromium-based alloys available from Special Metals Corporation. The sliding surface are made of materials that are oxidation and corrosion resistant materials suited for operation in extreme conditions. At least one, preferably both of the sliding surfaces 106 and 107 may be coated with a friction reducing material, such as aluminum oxide, or any other material capable of reducing the friction between two sliding surfaces. The coating of the friction reducing material may be provided by plasma coating. Alternatively, or in addition, a sliding element such as an annular sliding washer may be positioned between the sliding surfaces 106 and 107. The sliding washer may be made of silicon carbide, or another high resistance material. Reducing the friction prevents wear of the sliding surfaces 106 and 107.

The pipe 101, pipe ends 18 and 108, the flexible pipe wall 118, and casing parts 113 and 114, may be made of steel, such as a high temperature resistant steel or any other material capable of withstanding high temperature in the excess of 500 degC. Stainless steel may be used to withstand salt as heated medium.

The pipe 101 and/or the opposing pipe may be supplied with one or more heating elements (not shown). Alternatively, or in addition, the flexible pipe wall may be provided with or as a heating element. An electrical current may be provided through the heating elements to provide the thermal energy needed. The heating element(s) may for instance be activated to heat the heating medium to liquefy in the inner void 102. This may for instance be needed upon re-start after service, to re-start circulation of the heating medium that has solidified at low temperatures, e.g. in the solar system described below.

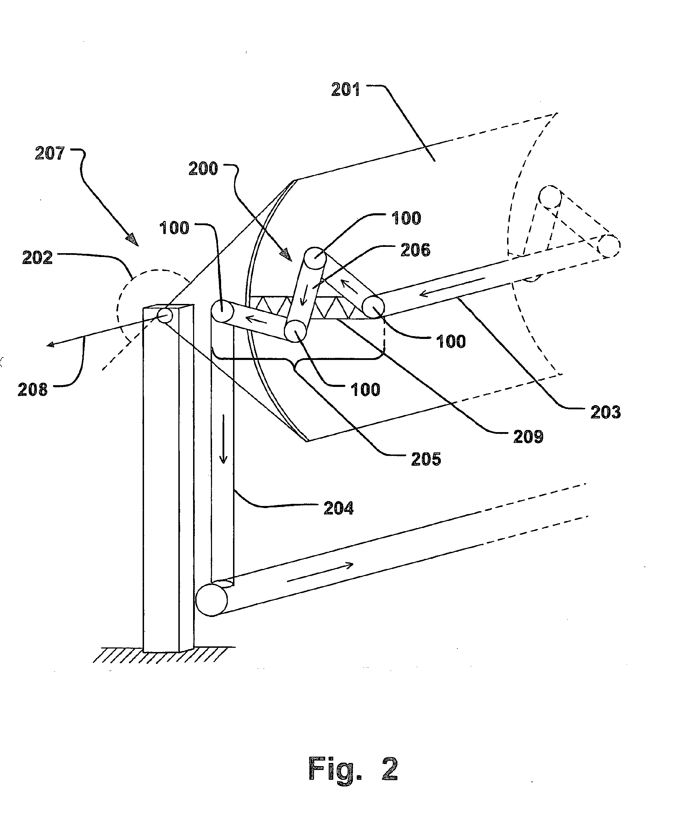

An embodiment is shown in Fig. 2, showing a perspective view of a system 200 comprising at least two seal assemblies 100 in a solar collector unit 207. In the embodiment in Fig. 2 four seal assemblies 100 are shown. The solar collector unit 207 comprises a moveable collector 201 for rotation in an angular interval 202 around a rotational axis 208 of the collector 201. The rotation of the collector follows the path of the sun during the day. A receiver tube 203, which is fixed in relation to the collector 201 by a fixing beam 209, is moveable in relation to a transportation tube 204 by rotation about the rotational axis 208, in the angular interval 202. The fixing beam 209 positions the receiver tube 203 in the focus point of the collector 201, independent of the current angle in the angular interval 202 of the collector. The receiver tube 203 is accordingly maintained in the focus point of the collector during the day. The linkage pipe 205 comprises at least one pipe segment 206 and joins the receiver tube 203 and the transportation tube 204. At least two seal assemblies 100 seal the pipe ends of the at least one pipe segment 206 to the receiver tube 203 and the transportation tube 204. In the embodiment illustrated in Fig. 2 four seal assemblies 100 seal the pipe ends of three pipe segments 206 to the receiver tube 203 and transportation tube 204. The pipe ends at the end points of the linkage pipe 205 are sealed by seal assemblies 100 to the receiver tube 203 and transportation tube 204, respectively. Whereas the pipe ends of the intermediate pipe segments 206 are sealed to each other by the seal assemblies 100.

The collector 201 focus the solar rays on the receiver tube 203 whereby the heat transportation medium inside the receiver tube 203, for example salt, is heated and transported through the pipe segments 205 to the transportation tube 204. Hence a circulation of the heated medium between the receiver tube 203 and the transportation tube 204 is obtained as the collector 201 rotates in the angular interval 202. The seal assemblies 100 provide the necessary range of movement for the receiver tube 203 to follow the rotating motion of the collector 201 tracing the sun for obtaining maximum efficiency. In addition, the seal assemblies 100 provide a sufficient range of movement in a direction parallel to the rotational axis 208, when heat cause the material of the receiver tube 203 to expand in said direction. A large number of receiver tubes 203 may be connected to each other in a serial connection when many collectors 201 are lined up in collector arrays. The expansion of such serial connection in the direction parallel to the rotational axis 208 may for instance be 0.5 m for every 100 m of serially connected receiver tubes 203. The seal assemblies 100 and the pipe segments 206 are joined such that the expansion is efficiently translated to a rotating motion between the pipe segments 206 without inducing any strain in the linkage pipe 205. Four seal assemblies 100 may be sufficient to account for both the rotational movement in the angular interval 202 and said expansion movement. Less than four seal assemblies may also be sufficient for providing a sufficient range of movement in certain operating conditions.

As will be appreciated by one of skill in the art, the present invention may be embodied as device, system, or method.

The present invention has been described above with reference to specific embodiments. However, other embodiments than the above described are equally possible within the scope of the invention. Different method steps than those described above, may be provided within the scope of the invention. The different features and steps of the invention may be combined in other combinations than those described. The scope of the invention is only limited by the appended patent claims.

## Claims

1. A seal assembly (100) for sealing a rotatable pipe (101), the rotatable pipe having an inner void (102) for transportation of high temperature medium therein, an axial direction (103), and a radial direction (104), the seal assembly comprising
a swivel joint (105) having two axially opposing annular sliding surfaces (106, 107), the first sliding surface (106) belonging to a first pipe end (108) aligned in the axial direction and the second sliding surface (107) belonging to a second pipe end (109) aligned in the axial direction, the first and second pipe ends being rotatable with respect to each other,
at least one bearing (110) being axially aligned for providing slidable movement between the first and second pipe ends, the bearing being positioned at the periphery in the radial direction of the pipe,
a heat insulating shield (111) being radially positioned between the sliding surfaces and the at least one bearing and extending substantially in the axial direction to cover a portion of a pipe end in said axial direction, whereby the bearing is shielded from the high temperature medium and/or heat thereof.

2. The seal assembly (100) according to claim 1,
wherein the heat insulating shield is arranged for blocking high temperature medium and/or heat thereof released from the swivel joint, such as from the first and second sliding surfaces, the heat insulating shield further comprising a radial shield portion (112) extending substantially in the radial direction, and having an axial displacement (120) from said at least one bearing, such being arranged to shield the at least one bearing from high temperature medium and/or heat thereof propagating in the radial direction after being released.

3. The seal assembly (100) according to claim 1 or 2, further comprising a first casing part (113) fixed to the first pipe end, and a second casing part (114) fixed to the second pipe end, the first and second casing parts being joined by the at least one bearing for providing said slidable movement between the first and second casing parts and pipe ends.

4. The seal assembly (100) according to claim 3,
wherein one of the first and second casing parts are provided with at least one opening (115) for diverting any released high temperature medium and/or heat thereof to the medium surrounding the seal assembly.

5. The seal assembly (100) according to claim 4,
wherein the at least one opening has a second axial displacement (121) from the at least one bearing, the second axial displacement being larger than the axial displacement of the radial shield portion.

6. The seal assembly (100) according to any of claims 1 to 5, wherein the heat insulating shield comprises a first shield (116) being in a fixed position in relation to the first pipe end, and a second shield (117) being in a fixed position in relation to the second pipe end, whereby the second shield is rotatable with respect to the first shield, and the first and second shields are extending substantially in the axial direction.

7. The seal assembly (100) according to claim 6,
wherein the first shield is displaced in the radial direction with respect to the second shield, and the axial extent of the first shield overlaps with the axial extent of the second shield; and/or wherein each of the first and second pipe ends comprise a resilient pipe end having a flexible pipe wall (118) extending in the axial direction between the each of the first and second sliding surfaces and a rigid pipe wall (119) of each of the first and second pipe ends.

8. The seal assembly (100) according to any of claims 1-7, wherein the sliding surfaces (106, 107) are arranged to be resiliently compressed in the axial direction.

9. The seal assembly (100) according to any of claims 1-8, wherein the at least one bearing is positioned in the radial direction of the first and second sliding surfaces.

10. The seal assembly (100) according to any of claims 3 and claims 4 to 9 dependent on claim 3, wherein the at least one bearing is placed at the periphery of the first and second casing parts, for joining said first and second casing parts, such that the sliding surfaces and the at least one bearing are arranged at a distance in the radial direction.

11. The seal assembly (100) according to any of claims 1-10, wherein the high temperature medium is a liquefiable solid that is liquid at a liquid temperature, such as salt; and/or wherein the high temperature medium has a liquid temperature where the high temperature medium is a liquid and a solid temperature where the high temperature medium is solid; and wherein the seal assembly (100) is operative at these temperatures, and wherein the liquid temperature is over 200 degC.

12. The seal assembly (100) according to any of claims 1-11, wherein the heat insulating shield is made from a ceramic, such as aluminum oxide; and/or wherein the sliding surfaces are coated by a friction reducing material, such as aluminum oxide; and/or wherein the heat insulating shield has an angle towards the axial direction.

13. A method of sealing a rotatable pipe (101) with a seal assembly (100), said pipe having an inner void (102) for transportation of high temperature medium therein, an axial direction (103), and a radial direction (104), the method comprising
providing sealing by means of a swivel joint (105) having two axially opposing annular sliding surfaces (106, 107), the first sliding surface (106) belonging to a first pipe end (108) aligned in the axial direction and the second sliding surface (107) belonging to a second pipe end (109) aligned in the axial direction, the first and second pipe ends being rotatable with respect to each other,
providing slidable movement by means of at least one bearing (110) being axially aligned between the first and second pipe ends, the bearing being positioned at the periphery in the radial direction of the pipe,
providing insulation by means of a heat insulating shield (111) being radially positioned between the sliding surfaces and the at least one bearing and extending substantially in the axial direction to cover a portion of said pipe end in said axial direction, thereby shielding the bearing from the high temperature medium and/or heat thereof.

14. A system (200) comprising at least two seal assemblies (100) according to claims 1-12 for a solar collector unit (207) comprising a moveable collector (201) for rotation in an angular interval (202), a moveable receiver tube (203), a fixed transportation tube (204), the receiver tube being rotatable with respect to the transportation tube in said angular interval, said system comprising
a linkage pipe (205) joining the receiver tube and transportation tube, the linkage pipe comprising at least one pipe segment (206), the at least two seal assemblies seal the pipe ends of the at least one pipe segment to the receiver tube and the transportation tube, whereby a circulation of a heated medium between the receiver tube and the transportation tube is obtained during rotation in said angular interval.

15. Use of a seal assembly (100) according to claims 1-12 in a solar collector unit comprising a moveable collector (201) for rotation at an angle (202), a moveable receiver tube (203), a fixed transportation tube (204), the receiver tube being rotated with respect to the transportation tube in said angular interval, the seal assembly being used in
a linkage pipe (205) joining the receiver tube and transportation tube, the linkage pipe comprising at least one pipe segment (206), the seal assembly being used for sealing the pipe ends of the at least one pipe segment to the receiver tube and the transportation tube, whereby a circulation of a heated medium between the receiver tube and the transportation tube is obtained during rotation in said angular interval.

## Patentansprüche

1. Dichtungsanordnung (100) zum Abdichten eines drehbaren Rohres (101), wobei das drehbare Rohr einen inneren Hohlraum (102) zum Transport eines Hochtemperaturmediums darin, eine axiale Richtung (103) und eine radiale Richtung (104) aufweist, wobei die Dichtungsanordnung umfasst:
ein Drehgelenk (105) mit zwei axial gegenüberliegenden ringförmigen Gleitflächen (106, 107), wobei die erste Gleitfläche (106) zu einem ersten Rohrende (108) gehört, das in der axialen Richtung ausgerichtet ist, und die zweite Gleitfläche (107) zu einem zweiten Rohrende (109) gehört, das in der axialen Richtung ausgerichtet ist, wobei erstes und zweites Rohrende drehbar in Bezug zueinander sind,
mindestens ein axial ausgerichtetes Lager (110), um eine Gleitbewegung zwischen erstem und zweitem Rohrende zu ermöglichen, wobei das Lager am Rand in der radialen Richtung des Rohres positioniert ist,
eine wärmeisolierende Abschirmung (111), die radial zwischen den Gleitflächen und dem mindestens einen Lager positioniert ist und sich im Wesentlichen in der axialen Richtung erstreckt, um einen Abschnitt eines Rohrendes in der axialen Richtung abzudecken, wodurch das Lager von dem Hochtemperatur-Medium und/oder dessen Wärme abgeschirmt ist.

2. Dichtungsanordnung (100) nach Anspruch 1, worin die wärmeisolierende Abschirmung zum Blockieren von Hochtemperaturmedium und/oder Wärme davon, die von dem Drehgelenk wie von erster und zweiter Gleitfläche freigesetzt werden, angeordnet ist, wobei die wärmeisolierende Abschirmung ferner einen radialen Abschirmteil (112) umfasst, der sich im Wesentlichen in radialer Richtung erstreckt und eine axiale Verschiebung (120) von dem wenigstens einen Lager aufweist, und derart angeordnet ist, dass er das mindestens eine Lager von Hochtemperaturmedium und/oder Wärme davon, die sich nach ihrer Freisetzung in radialer Richtung ausbreiten, abschirmt.

3. Dichtungsanordnung (100) nach Anspruch 1 oder 2, welche ferner einen ersten Gehäuseteil (113), der an dem ersten Rohrende befestigt ist, und einen zweiten Gehäuseteil (114), der an dem zweiten Rohrende befestigt ist, aufweist, wobei erster und zweiter Gehäuseteil durch das wenigstens eine Lager verbunden sind, um die Gleitbewegung zwischen dem ersten und zweiten Gehäuseteil und den Rohrenden zu ermöglichen.

4. Dichtungsanordnung (100) nach Anspruch 3, worin eines der ersten und zweiten Gehäuseteile mit mindestens einer Öffnung (115) zum Umleiten von freigesetztem Hochtemperaturmedium und/oder Wärme davon zu dem die Dichtungsanordnung umgebenden Medium versehen ist.

5. Dichtungsanordnung (100) nach Anspruch 4, worin die mindestens eine Öffnung eine zweite axiale Verschiebung (121) von dem wenigstens einen Lager aufweist, wobei die zweite axiale Verschiebung größer ist als die axiale Verschiebung des radialen Abschirmteils.

6. Dichtungsanordnung (100) nach einem der Ansprüche 1 bis 5, worin die wärmeisolierende Abschirmung eine erste Abschirmung (116) in einer festen Position in Bezug auf das erste Rohrende und eine zweite Abschirmung (117) in einer festen Position in Bezug auf das zweite Rohrende aufweist, wobei die zweite Abschirmung drehbar ist in Bezug auf die erste Abschirmung und die ersten und zweiten Abschirmungen sich im Wesentlichen in der axialen Richtung erstrecken.

7. Dichtungsanordnung (100) nach Anspruch 6, worin die erste Abschirmung in der radialen Richtung bezüglich der zweiten Abschirmung versetzt ist und die axiale Ausdehnung der ersten Abschirmung mit der axialen Ausdehnung der zweiten Abschirmung überlappt, und/oder worin das erste und das zweite Rohrende jeweils ein nachgiebiges Rohrende mit einer flexiblen Rohrwandung (118) aufweisen, das sich in der axialen Richtung zwischen jeweils der ersten und der zweiten Gleitfläche und einer starren Rohrwand (119) jedes der ersten und zweiten Rohrenden erstreckt.

8. Dichtungsanordnung (100) nach einem der Ansprüche 1 bis 7, worin die Gleitflächen (106, 107) angeordnet sind, um elastisch in der axialen Richtung komprimiert zu werden.

9. Dichtungsanordnung (100) nach einem der Ansprüche 1 bis 8, worin das mindestens eine Lager in der radialen Richtung der ersten und zweiten Gleitflächen angeordnet ist.

10. Dichtungsanordnung (100) nach einem der Ansprüche 3 und Ansprüche 4 bis 9, soweit von Anspruch 3 abhängig, worin das mindestens eine Lager am Rand der ersten und zweiten Gehäuseteile platziert ist, um die ersten und zweiten Gehäuseteile so zusammenzufügen, dass die Gleitflächen und das mindestens eine Lager mit einem Abstand in der radialen Richtung angeordnet sind.

11. Dichtungsanordnung (100) nach einem der Ansprüche 1 bis 10, worin das Hochtemperaturmedium ein verflüssigbarer Feststoff ist, der bei einer Flüssigtemperatur flüssig ist, wie Salz, und/oder worin das Hochtemperaturmedium eine Flüssigtemperatur hat, bei der das Hochtemperaturmedium eine Flüssigkeit ist, und eine Festtemperatur, bei der das Hochtemperaturmedium fest ist, und worin die Dichtungsvorrichtung (100) bei diesen Temperaturen betreibbar ist, und worin die Flüssigtemperatur über 200 Grad C liegt.

12. Dichtungsanordnung (100) nach einem der Ansprüche 1 bis 11, worin die wärmeisolierende Abschirmung aus einer Keramik wie Aluminiumoxid besteht, und/oder worin die Gleitflächen mit einem reibungsvermindernden Material beschichtet sind, wie Aluminiumoxid, und/oder worin die wärmeisolierende Abschirmung einen Winkel zur axialen Richtung hat.

13. Verfahren zum Abdichten eines drehbaren Rohres (101) mit einer Dichtungsanordnung (100), wobei das Rohr einen inneren Hohlraum (102) zum Transport von Hochtemperatur-medium darin, eine axiale Richtung (103) und eine radiale Richtung (104) aufweist, wobei das Verfahren umfasst:
Bereitstellen einer Abdichtung mittels eines Drehgelenks (105) mit zwei sich axial gegenüberliegenden ringförmigen Gleitflächen (106, 107), wobei die erste Gleitfläche (106) zu einem ersten Rohrende (108) gehört, das in der axialen Richtung ausgerichtet ist, und die zweite Gleitfläche (107) zu einem zweiten Rohrende (109) gehört, das in der axialen Richtung ausgerichtet ist, wobei das erste und das zweite Rohrende drehbar in Bezug zueinander sind,
Bereitstellen einer Gleitbewegung mittels mindestens eines Lagers (110), das axial zwischen dem ersten und dem zweiten Rohrende ausgerichtet ist, wobei das Lager am Rand in der radialen Richtung des Rohres positioniert ist,
Bereitstellen einer Isolation mittels einer wärmeisolierenden Abschirmung (111), die radial zwischen den Gleitflächen und dem mindestens einen Lager angeordnet ist und sich im Wesentlichen in der axialen Richtung erstreckt, um einen Abschnitt des Rohrendes in der axialen Richtung abzudecken und dadurch das Lager von dem Hochtemperaturmedium und/oder dessen Wärme abzuschirmen.

14. System (200), das wenigstens zwei Dichtungsanordnungen (100) nach Ansprüchen 1 bis 12 umfasst, für eine Sonnenkollektoreinheit (207), die einen beweglichen Kollektor (201) für die Drehung in einem Winkelintervall (202), ein bewegliches Aufnahmerohr (203), ein festes Transportrohr (204) aufweist, wobei das Aufnahmerohr in dem Winkelintervall drehbar ist in Bezug auf das Transportrohr, wobei das System umfasst:
ein Verbindungsrohr (205), dass das Aufnahmerohr und das Transportrohr verbindet, wobei das Verbindungsrohr mindestens ein Rohrsegment (206) umfasst, die wenigstens zwei Dichtungsanordnungen die Rohrenden des wenigstens einen Rohrsegments gegen das Aufnahmerohr und das Transportrohr abdichten, wodurch eine Zirkulation eines erhitzten Mediums zwischen dem Aufnahmerohr und dem Transportrohr während der Drehung in dem Winkelintervall erzielt wird.

15. Verwendung einer Dichtungsanordnung (100) nach Ansprüchen 1 bis 12 in einer Sonnenkollektoreinheit, die einen beweglichen Kollektor (201) für die Drehung in einem Winkel (202), ein bewegliches Aufnahmerohr (203), ein festes Transportrohr (204) aufweist, wobei das Aufnahmerohr in dem Winkelintervall in Bezug auf das Transportrohr gedreht wird, wobei die Dichtungsanordnung verwendet wird in
einem Verbindungsrohr (205), dass das Aufnahmerohr und das Transportrohr verbindet, wobei das Verbindungsrohr mindestens ein Rohrsegment (206) umfasst, wobei die Dichtungsanordnung verwendet wird zum Abdichten der Rohrenden des wenigstens einen Rohrsegments gegen das Aufnahmerohr und das Transportrohr, wodurch eine Zirkulation eines erhitzten Mediums zwischen dem Aufnahmerohr und dem Transportrohr während der Drehung in dem Winkelintervall erzielt wird.

## Revendications

1. Ensemble de joint (100) pour sceller un tuyau rotatif (101), le tuyau rotatif ayant un vide interne (102) pour transporter un milieu à haute température à l'intérieur de ce dernier, une direction axiale (103) et une direction radiale (104), l'ensemble de joint comprenant
un joint à rotule (105) ayant deux surfaces de coulissement annulaires (106, 107) axialement opposées, la première surface de coulissement (106) appartenant à une première extrémité de tuyau (108) alignée dans la direction axiale et la seconde surface de coulissement (107) appartenant à une seconde extrémité de tuyau (109) alignée dans la direction axiale, les première et seconde extrémités de tuyau pouvant tourner l'une par rapport à l'autre,
au moins un palier (110) axialement aligné pour fournir un mouvement de coulissement entre les première et seconde extrémités de tuyau, le palier étant positionné à la périphérie dans la direction radiale du tuyau,
une gaine calorifuge (111) radialement positionnée entre les surfaces de coulissement et le au moins un palier et s'étendant sensiblement dans la direction axiale pour recouvrir une section d'une extrémité de tuyau dans ladite direction axiale, moyennant quoi le palier est protégé par rapport au milieu à haute température et/ou sa chaleur.

2. Ensemble de joint (100) selon la revendication 1, dans lequel la gaine calorifuge est agencée pour bloquer le milieu à haute température et/ou sa chaleur libéré(e) par le joint à rotule, comme par les première et seconde surfaces de coulissement, la gaine calorifuge comprenant en outre une section de gaine radiale (112) s'étendant sensiblement dans la direction radiale, et ayant un déplacement axial (120) à partir dudit au moins un palier, cette dernière étant agencée pour protéger le au moins un palier contre le milieu à haute température et/ou sa chaleur se propageant dans la direction radiale après avoir été libérée.

3. Ensemble de joint (100) selon la revendication 1 ou 2, comprenant en outre une première partie de revêtement (113) fixée sur la première extrémité de tuyau, et une seconde partie de revêtement (114) fixée sur la seconde extrémité de tuyau, les première et seconde parties de revêtement étant assemblées par le au moins un palier afin de fournir ledit mouvement coulissant entre les première et seconde parties de revêtement et les extrémités de tuyau.

4. Ensemble de joint (100) selon la revendication 3, dans lequel l'une des première et seconde parties de revêtement est prévue avec au moins une ouverture (115) pour dévier tout milieu à haute température et/ou sa chaleur libéré(e) vers le milieu entourant l'ensemble de joint.

5. Ensemble de joint (100) selon la revendication 4, dans lequel la au moins une ouverture a un second déplacement axial (121) à partir du au moins un palier, le second déplacement axial étant plus grand que le déplacement axial de la section de gaine radiale.

6. Ensemble de joint (100) selon l'une quelconque des revendications 1 à 5, dans lequel la gaine calorifuge comprend une première gaine (116) qui est dans une position fixe par rapport à la première extrémité de tuyau, et une seconde gaine (117) qui est dans une position fixe par rapport à la seconde extrémité de tuyau, moyennant quoi la seconde gaine peut tourner par rapport à la première gaine, et les première et seconde gaines s'étendent sensiblement dans la direction axiale.

7. Ensemble de joint (100) selon la revendication 6, dans lequel la première gaine est déplacée dans la direction radiale par rapport à la seconde gaine, et l'étendue axiale de la première gaine chevauche l'étendue axiale de la seconde gaine ; et/ou dans lequel chacune des première et seconde extrémités de tuyau comprend une extrémité de tuyau élastique ayant une paroi de tuyau souple (118) s'étendant dans la direction axiale entre chacune des première et seconde surfaces de coulissement et une paroi de tuyau rigide (119) de chacune des première et seconde extrémités de tuyau.

8. Ensemble de joint (100) selon l'une quelconque des revendications 1 à 7, dans lequel les surfaces de coulissement (106, 107) sont agencées pour être comprimées de manière élastique dans la direction axiale.

9. Ensemble de joint (100) selon l'une quelconque des revendications 1 à 8, dans lequel le au moins un palier est positionné dans la direction radiale des première et seconde surfaces de coulissement.

10. Ensemble de joint (100) selon l'une quelconque des revendications 3 et 4 à 9 dépendantes de la revendication 3, dans lequel le au moins un palier est placé à la périphérie des première et seconde parties de revêtement pour assembler lesdites première et seconde parties de revêtement, de sorte que les surfaces de coulissement et le au moins un palier sont agencés à distance dans la direction radiale.

11. Ensemble de joint (100) selon l'une quelconque des revendications 1 à 10, dans lequel le milieu à haute température est un solide liquéfiable qui est liquide à une température de liquide, tel que le sel ; et/ou dans lequel le milieu à haute température a une température de liquide où le milieu à haute température est un liquide et une température de solide lorsque le milieu à haute température est solide ; et dans lequel l'ensemble de joint (100) est opérationnel à ces températures, et dans lequel la température de liquide est supérieure à 200 degrés C.

12. Ensemble de joint (100) selon l'une quelconque des revendications 1 à 11, dans lequel la gaine calorifuge est réalisée à partir d'une céramique, telle que l'oxyde d'aluminium ; et/ou dans lequel les surfaces de coulissement sont recouvertes par un matériau de réduction de friction, tel que l'oxyde d'aluminium ; et/ou dans lequel la gaine calorifuge présente un angle vers la direction axiale.

13. Procédé pour sceller un tuyau rotatif (101) avec un ensemble de joint (100), ledit tuyau ayant un vide interne (102) pour transporter un milieu à haute température à l'intérieur de ce dernier, une direction axiale (103) et une direction radiale (104), le procédé comprenant
la fourniture du scellement au moyen d'un joint à rotule (105) ayant deux surfaces de coulissement annulaires (106, 107) axialement opposées, la première surface de coulissement (106) appartenant à une première extrémité de tuyau (108) alignée dans la direction axiale et la seconde surface de coulissement (107) appartenant à une seconde extrémité de tuyau (109) alignée dans la direction axiale, les première et seconde extrémités de tuyau pouvant tourner l'une par rapport à l'autre,
la fourniture du mouvement coulissant au moyen d'au moins un palier (110) axialement aligné entre les première et seconde extrémités de tuyau, le palier étant positionné à la périphérie dans la direction radiale du tuyau,
la fourniture de l'isolation au moyen d'une gaine calorifuge (111) radialement positionnée entre les surfaces de coulissement et le au moins un palier et s'étendant sensiblement dans la direction axiale pour recouvrir une section de ladite extrémité de tuyau dans ladite direction axiale, protégeant ainsi le palier contre le milieu à haute température et/ou sa chaleur.

14. Système (200) comprenant au moins deux ensembles de joint (100) selon les revendications 1 à 12 pour une unité de capteur solaire (207) comprenant un capteur mobile (201) pour tourner sur un intervalle angulaire (202), un tube récepteur mobile (203), un tube de transport fixe (204), le tube récepteur pouvant tourner par rapport au tube de transport dans ledit intervalle angulaire, ledit système comprenant
un tuyau de liaison (205) assemblant le tube récepteur et le tube de transport, le tuyau de liaison comprenant au moins un segment de tuyau (206), les au moins deux ensembles de joint scellent les extrémités de tuyau du au moins un segment de tuyau au tube récepteur et au tube de transport, moyennant quoi l'on obtient une circulation d'un milieu chauffé entre le tube récepteur et le tube de transport pendant la rotation sur ledit intervalle angulaire.

15. Utilisation d'un ensemble de joint (100) selon les revendications 1 à 12 dans une unité de capteur solaire comprenant un capteur mobile (201) pour une rotation sur un angle (202), un tube récepteur mobile (203), un tube de transport fixe (204), le tube récepteur étant entraîné en rotation par rapport au tube de transport sur ledit intervalle angulaire, l'ensemble de joint étant utilisé dans
un tuyau de liaison (205) assemblant le tube récepteur et le tube de transport, le tube de liaison comprenant au moins un segment de tuyau (206), l'ensemble de joint qui est utilisé pour sceller les extrémités de tuyau du au moins un segment de tuyau sur le tube récepteur et le tube de transport, moyennant quoi l'on obtient une circulation d'un milieu chauffé entre le tube récepteur et le tube de transport pendant la rotation sur ledit intervalle angulaire.
